# EUROPEAN PATENT APPLICATION

(11) **EP 4 467 237 A1**
(43) Date of publication of application: **27.11.2024**
(21) Application number: 23175769.1
(22) Date of filing: 26.05.2023
(51) Int. Cl.: B01L 3/00, G01N 35/00, G09F 3/00

(54) **MARKER AND METHOD FOR IDENTIFICATION OF AN OBJECT SLIDE**

(71) Applicant: Medizinische Universität Graz, 8010 Graz (AT)
(72) Inventor: PLASS, Markus, 8010 Graz (AT); MÜLLER, Heimo, 8010 Graz (AT); WAGENTHALER, Lisa-Marie, 8010 Graz (AT)
(74) Representative: Maiwald GmbH

(57) **Abstract**

The invention concerns an object slide comprising an upper surface and a lower surface arranged opposite each other, a first side surface and a second side surface arranged spaced apart from each other, wherein the first side surface and the second side surface are arranged perpendicular to the upper surface. The object slide is made of a transparent material. A marker is arranged inside the object slide, wherein the marker extends inside the object slide between the upper surface and the lower surface, wherein the marker comprises a three dimensional shape, wherein the marker is configured and arranged such that the marker is visible from at least two surfaces of the object slide. The invention further concerns a method for identifying the object slide using a maker reading device.

## Description

### Field of invention

The invention relates to the field of objects slide for a laboratory. More specifically, the invention relates to the field of markers for identification of an object slide and a method for identification an object slide and for manufacturing such an object slide, wherein the object slide may be equipped with respective specimen, objects, used in laboratories.

### Art Background

In the microscopy, glass slides are used having a standardized size, in particular standardized width, length and thickness. These slides are divided into two areas. One area is comprised of the surface of the slide onto which the probe, specimen, which should be analyzed by microscopy, is attached to the slide. The other area comprises marking and/or labelling for the probe, wherein a barcode or other further information are attached to the other area. The barcode may be printed as a label and is attached to the slide or the barcode may be printed directly onto the surface of the glass slide. Both the pre-printed barcode and the barcode directly printed onto the slide are generated afterwards. This means that the previously applied information (on the labeling surface) is/are manually synchronized into a database and then is/are used to generate and print the barcode. In this step, errors may occur during transmission, for example if the information is no longer clearly recognizable.
In the second case, the barcode and the information are printed directly on the slide, which means that no transmission errors can occur. However, a big problem can be when the barcode is not well printed and therefore not machine readable. In this case, a glued-on barcode must be used in addition to the existing barcode, again creating the risk of a transmission error due to manual input.

In routine operation, due to the smaller number, the slides can be stored and transported horizontally in slide folders. Such a folder can hold about 24 slides and the barcode is easily readable with this type of storage. However, this type of storage is not possible due to the number for archiving, which is why stack storage is used here. The slides are sorted vertically in trays, which means the smaller side upwards. This storage method can accommodate about 450 - 500 slides in a single tray, depending on how closely they are arranged. These trays are sorted into labeled drawers. In this storage the barcode is no longer visible and readable, since only the side surface (top) is visible. When searching for a specific sample on a slide, the correct drawer must first be found due to the marking, labeling and then within this drawer each tray must be taken out and looked through individually, which requires an immense amount of time for a single slide as each object slide has to be removed and looked up individually. Due to the continuous sorting, when the slide is no longer needed, it has to be shifted back to the exact same place with the same amount of time.

### Summary of the Invention

Therefore, there exist a need for optimizing the marker, i.e. the marking, labelling, of an object slide, such that it is possible to improve the storing of the glass slide in the stacks.

An object of the invention is to provide a marker for an object slide, and an object slide, and a method for identifying an object slide, which allows that the object slide can be easily identified when stored in stack storage and simultaneously allows a faster search process. Accordingly, an object is to provide a marker, and an object slide, which is visible in the stack storage without the need to manually move the object slide for analysing the marker and without the need for look up every single object slide.

The object of the present invention is solved with the subject matter of the independent claims, wherein further embodiments are incorporated in the dependent claims.

According to a first aspect of the invention an object slide is described, comprising an upper surface and a lower surface arranged opposite each other. The object slide further comprises a first side surface and a second side surface arranged spaced apart from each other, wherein the first side surface and the second side surface are arranged perpendicular to the upper surface. The object slide is made of a transparent material, and a marker is arranged inside the object slide, wherein the marker extends inside the object slide between the upper surface and the lower surface. The marker comprises a three dimensional shape, wherein the marker is configured and arranged such that the marker is visible from at least two surfaces of the object slide.

In the context of the present invention, the term "object slide" shall be understood to describe a slide onto which an object can be positioned for examination, for instance for microscopy a microscopy slide. In particular, the object slide may be a standardized glass slide, having a predetermined length, width and thickness. The object slide may be a flat glass slide having the respective surfaces, onto which an object for examination may be positioned. The object slide may comprise at least to areas, wherein the first area comprises an object, specimen, probe, attached onto a surface of the object slide. The second area may comprise an area on and/or in the object slide wherein the marker should be provided. The object slide may have a rectangular shape, wherein the upper surface and the lower surface are surfaces on which no specimen is attached. Contrary, the first side surface may be the front surface to which the specimen may be attached and the second side surface may be the rear surface of the object slide. The first side surface may be the flat front surface of the object slide and the second side surface may be flat rear surface of the object slide.

In the context of the present invention, the term "transparent material" shall be understood to describe any material through which a respective marker is visible. For example, the material may be at least one of glass, crystal, quartz crystal.

In the context of the present invention, the term "marker" shall be understood to describe any information which can be arranged, and/or labelled onto, in particular inside the object slide, for identification of the object slide. For instance, information about the object, specimen and/or probe attached onto the object slide. The marker may be formed in such a manner that information about the probe attached on the object slide may be encoded by the marker. Further, the marker may be attached during the manufacturing, hence before the attachment of any probe, such that the marker may be an individual identifier of the object slide, which later on can be combined in a data base with the respective object, specimen information.

In the context of the present invention, the term "upper surface" shall be understood to describe a surface of the object slide, which is one of the two smaller surfaces of the object slide, and the lower surface is the second smaller surface on the side of the object slide. The upper surface and the lower surface may be arranged spaced apart from each other. The upper surface is arranged perpendicular to the first side surface and the second side surface, also the lower surface may be arranged perpendicular to the first side surface and the second side surface.

The marker extends inside the object slide, accordingly the marker may be arranged between the upper surface and the lower surface. For example, the marker may extend along a plane orthogonal to the upper surface and may alternatively or additionally extend inside the object slide along a plane parallel to the upper surface.

With the configuration of the marker, it is visible from at least two surfaces of the object slide, the marker may be readable for instance for a marker reading device from at least two different sides of the object slide. These two sides may be front surface, hence the first side surface, and at least one of the second side surface, the upper surface, the lower surface, a right surface side, a left surface side of the object slide. For example, the marker may be visible from the first side surface and the second side surface, or from the first side surface and the upper surface, or from the second side surface and from the upper surface and from any combination thereof. The right surface side may be a surface of the object slide positioned on the right side of the object slide when the first side surface is viewed from the front, accordingly the left surface side may be a surface of the slide on the right side when the first side surface is viewed from the front.

Additionally and/or alternatively the marker may be visible from at least three sides of the object slide.

Advantageously, the object slide maintains is standardized size, which is necessary for the digitalization process and the available object slide scanner. The marker may be readable from not only one side of the object slide but also from at least two different sides of the object slide, this allows that the object slide must not be removed out of the storage, when the marker should be read.

Further, due to the three dimensional shape of the marker arranged inside a transparent material the marker is made visible also when arranged inside the material. This allows that the object slide can be identified by the marker visible through the transparent material and that any further identification like preprinted or on the slide printed marker and/or labels can be omitted. Accordingly, failures arising due to the attaching of the printed labels or wear of the labels can be prevented, because the marker is arranged inside the object slide and therefore not prone to external influences.

According to an exemplary embodiment of the invention, the three dimensional shape may comprise a shape of at least one of a rectangular shape, a cuboid shape, a sphere shape, and a dot shape or a combination thereof. Hence, the three dimensional shape be formed of at least one of the above mentioned shapes or formed of two different shapes or any other combination thereof. For instance, the three dimensional shape may be a three dimensional unique identifier arranged inside the object slide, like a barcode or a three dimensional dot code arranged inside the object slide, or any other combination of one and the same or of different shapes.

According to an exemplary embodiment of the invention, the marker may comprise a plurality of volume elements for forming the three dimensional shape. For instance, at least two volume elements are used for forming the marker. It is also possible to use a plurality of volume elements, which means more than two volume elements. The number of volume elements may not be restricted, only by the size of the object slide and depending on the size chosen for the volume elements. The plurality of volume elements may comprise the shape as described in the other embodiments. For instance, the plurality of volume elements may comprise the same shape or they may differ in shape.

According to an exemplary embodiment of the invention, the at least two surfaces from which the marker is visible may be surfaces of the object slide which are orthogonal to each other. For example, the marker may be visible from the upper surface and from the first side surface. Any other combination of surfaces/sides of the object slide may also be possible.

According to an exemplary embodiment of the invention, the marker may be visible from at least three and/or four surfaces. Accordingly, the marker may be visible from more than two surfaces of the object slide. For instance, the marker may be visible, and hence readable, from the upper surface, the lower surface, the first side surface and the second side surface or any combination thereof.

According to an exemplary embodiment of the invention, the marker may be generated inside the object slide by laser technology. For instance, the marker may be generated by depth engraving. Due to the arrangement of the marker and the use of a laser technology, it may be possible that the marker is formed inside the object slide during the manufacturing of the object slide. This may ease the process for identification and archiving object slides, as any printer for printing labels on or for object slides may be omitted.

According to an exemplary embodiment of the invention, the marker may comprise a first portion and a second portion, and/or wherein the first portion and the second portion may be arranged adjacent to each other. For instance, the first portion and the second portion may be arranged next to each other along the same plane, such that they are visible from the first side surface of the object slide as being arranged next to each other in one line. On the other hand, it may also be possible that the first and second portion may be arranged above each other such that each portion is arranged on a different plane, which planes are parallel to each other. According to this embodiment the two portion may be arranged adjacent to each other in one plane and/or in at least two planes. For instance, when viewed from the first side surface the two portion are arranged above each other, hence adjacent above each other in a plane parallel to the first side surface. Additionally, the two portion are arranged adjacent to each other when viewed form the upper surface, when viewed from the upper surface the offset between the both portions becomes visible. The first portion and the second portion may be offset from each other in a plane parallel to the upper surface. Other arrangements and combinations may also be possible.

According to an exemplary embodiment of the invention, the first portion and the second portion may be spaced apart from each other. In particular, the first and second portion may be spaced apart from each other, such that they may be arranged inside the object slide at different positions. For instance the first portion, which may be a first volume portion, extends into a different direction than the second portion, which may be a second volume portion. On the other hand, the first and second portion may be spaced apart from each other but may be arranged inside the object slide in such a manner that they overlap in a plane inside the object slide. For example, the first portion extends along a plane parallel to the upper surface and the second portion extends along a plane parallel to the upper surface, such that they may be spaced apart but arranged on the same plane inside the object slide (at least partially and/or completely).

According to an exemplary embodiment of the invention, the first portion and the second portion may be arranged adjacent to each other in a direction of a plane parallel to the upper and the lower surface. Additionally and/or alternatively, the first portion and the second portion may do not overlap in the direction of the plane parallel to the upper and the lower surface.

Further, the first and second portion may be arranged adjacent to each other in such a manner that from an adjacent region, which may be a contact surface, each portion extends in an opposite direction in the direction of the plane parallel to the upper and lower surface.

According to an exemplary embodiment of the invention, the first portion and the second portion may be arranged adjacent to each other in a direction of a plane parallel to the first side surface. Further, the first and second portion may be arranged adjacent to each other in such a manner that from an adjacent region, which may be a contact surface, each portion extends in an opposite direction, in the direction of the plane parallel to the first side surface. Additionally and/or alternatively, the first portion and the second portion may do not overlap in the direction of the plane parallel to the first side surface.

According to an exemplary embodiment of the invention, the marker may comprise a first row of a plurality of volume elements and a second row of a plurality of volume elements. In other words, the three dimensional shape of the marker comprises the rows of volume elements. Hence, the three dimensional shape of the marker may be formed by the first row and/or second rows of volume elements. For example, the rows may comprise a different shape, such that the first row has a different three dimensional shape than the second row. On the other hand, it may be possible that each volume element of at least one row, for example of the first row (the second row may also be possible) may comprise different three dimensional shape. The rows may be configured in such a manner that the volume elements of one row may comprise different three dimensional shapes or some volume elements have the same shape and others have a different shape. The three dimensional shape may vary depending on the information which should be encoded with the respective volume element.

Additionally and/or alternatively, the first row may be arranged above the second row in a direction parallel to the upper surface, wherein the first row and the second row may comprise a distance between each other in a direction parallel to the upper surface. Further, it may be possible that the first row and the second row may comprise an offset between each other in a direction perpendicular to the upper surface.

According to an exemplary embodiment of the invention, the first row may be associated with the first portion and wherein the second row may be associated with the second portion. Hence, the volume elements forming the three dimensional shape may be divided into two rows.

According to an exemplary embodiment of the invention, the first portion may be arranged in a direction nearer to the upper surface than the second portion. Alternatively, the second portion may be arranged in a direction nearer to the upper surface than the first portion. It may also be possible that the first (or the second) portion may be arranged directly at the upper surface, such that the respective portion extends from the upper surface into the object slide.

According to an exemplary embodiment of the invention, at least two volume elements of the plurality of volume elements may differ from each other in shape. Also more than two volume elements may differ in shape. By providing different shapes, for instance at least in length, width, height, or diameter, the respective information can be encoded by the marker.

According to an exemplary embodiment of the invention, the volume elements may comprise a rectangular shape, wherein the rectangular shape of at least one volume element from the plurality of volume elements may differ in size of the other volume elements. Additionally and/ or alternatively, a first number of volume elements comprises a different shape than a second number of volume elements. For instance, it may be possible that all volume elements comprise a different size. The difference of the size may be a difference in length, width and/or height of the rectangular volume element or a combination thereof.

According to a second aspect of the invention, a method for identifying an object slide according to any of the other embodiments as described hereinabove using a marker reading device may be described The method comprising the steps of providing a plurality of object slides to the marker reading device, determining an object slide to be identified by a user, analyzing the plurality of object slide by the marker reading device, comparing the plurality of object slides with the object slide to be identified, output of a comparison signal to the marker reading device if one of the plurality of object slides matches the object slide to be identified, wherein the step of analyzing the plurality of object slides comprises analyzing the upper surface of the object slide.

In the context of the present invention, the term "marker reading device" shall be understood to describe any electronic device, automatically or manually operated, which is able to read any kind of marker from an object slide. The marker reading device may comprise a camera for detecting the provided object slides. Further, the marker reading device may comprise a processor and respective electronic components being able to process the signal information of the camera and compare the markers of the provided plurality of object slides with the marker of the object slide, which should be identified. Furthermore, the marker reading device may comprise a user input, for instance a display or keypad, alternatively the device may be coupled to a computer comprising the input, for enable a user to input the marker of the object slide which should be identified.

In other words, the method for identifying an object slide may comprises that a plurality of object slides are presented, for instance from a tray of a drawer, wherein the object slides are stored in a stack storage. In this stack storage the upper surface, hence the upper narrow side, of the object slides is presented to the marker reading device. Thereby, the marker reading device may be able to read one or more marker from one or more object slides. Accordingly, the step of analyzing the plurality of object slide by the marker reading device may comprise analyzing one or more objects slide one after another or more object slides simultaneously. The marker may be presented to the marker reading device as a bulk and the marker reading device may analyses the presented bulk of object slides with a camera. From the picture viewed by the camera the marker reading device is able to determine the searched object slide by identifying the respective marker of the object slide.

According to a third aspect of the invention a method for manufacturing an object slide according to any one of the embodiments described herein is described. According to this method the marker is applied to the object slide by laser technology. The marker can be applied during the manufacturing of the slide.

It should be noted that any feature, function and/or element described in the following with reference to the object slide equally applies to the marker and/or the method, and vice versa. Accordingly, any feature, function, step and/or element described in the following with reference to one aspect of the present disclosure equally applies to any other aspect of the present disclosure.

It has to be noted that embodiments of the invention have been described with reference to different subject matters. In particular, some embodiments have been described with reference to apparatus type claims whereas other embodiments have been described with reference to method type claims. However, a person skilled in the art will gather from the above and the following description that, unless other notified, in addition to any combination of features belonging to one type of subject matter also any combination between features relating to different subject matters, in particular between features of the apparatus type claims and features of the method type claims is considered as to be disclosed with this application.

### Brief Description of the Drawings

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.
Fig. 1 illustrates a front view of a standardized object slide of the state of the art.
Fig. 2 illustrates a side view of a standardized object slide of the state of the art.
Fig. 3 illustrates a front view and a side view of an object slide according to an embodiment of the invention.
Fig. 4 illustrates a portion of an object slide according to an embodiment of the invention.
Fig. 5 illustrates a marker in an object slide according to an embodiment of the invention.
Fig. 6 illustrates a marker reading device according to an embodiment of the invention.
Fig. 7 illustrates a marker reading device according to an embodiment of the invention.
Fig. 8 illustrates a stack of objet slides comprising marker according to an embodiment of the invention.

### Detailed Description of Exemplary Embodiments

The illustrations in the drawings are schematic. It is noted that in different figures similar or identical elements are provided with the same reference signs.

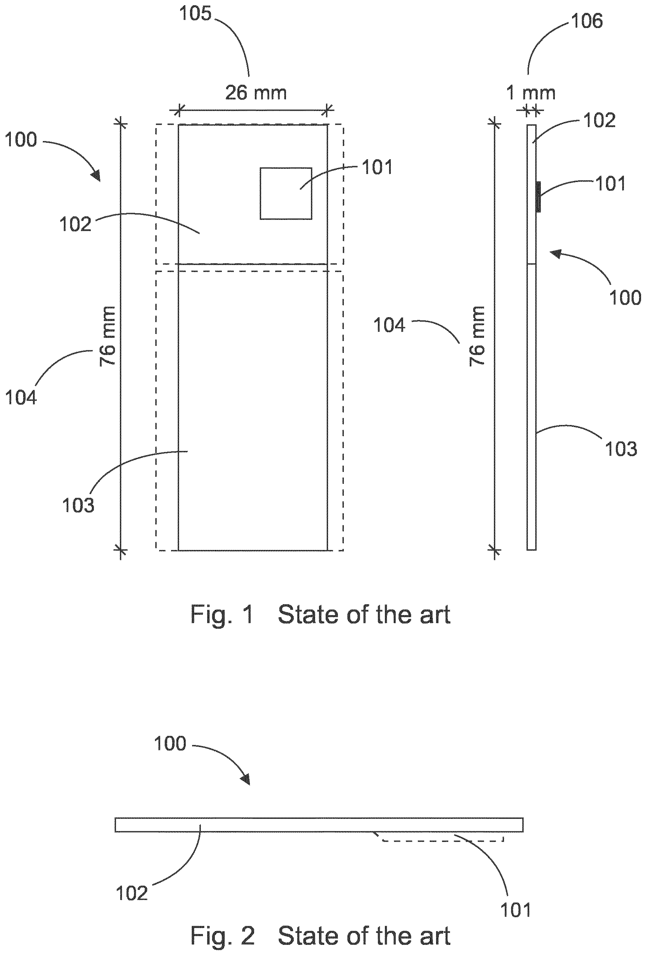

Figure 1 illustrates a standardized object slide 100 of the state of the art. The standard size is 26 mm x 76 mm with a thickness of 1 to 1, 5 mm. The object slide 100 has a rectangular shape extending in width 105 and length 104. Further, the object slides comprises the thickness 106. The standardized object slide may be separated into two areas, which are the label area 102 and the object area 103. In the label area 102 the label 101 is arranged at a surface of the object slide 100. As can be seen in the side view of the objet slide on the right side of Fig. 1, the label 101 is attached on the surface of the object slide 100 and does not extend inside the object slide 100.

Figure 2 illustrates a further side view of the object slide 100, wherein the object slide 100 is viewed from the smaller upper side surface. In Figure 2, the label area is shown with the attached label 101 on top of the surface of the object slide 100.

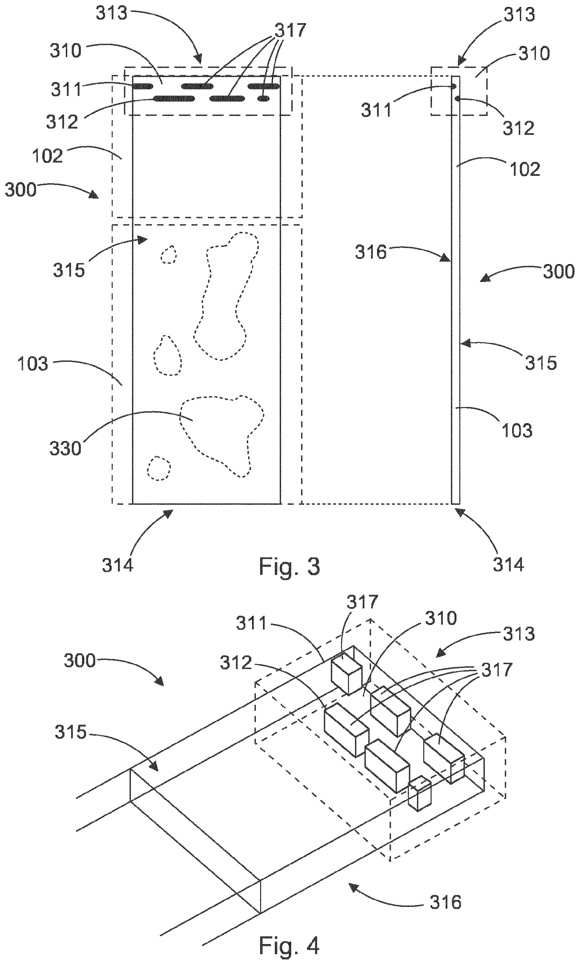

Figure 3 illustrates an object slide in a front view and a side view according to an embodiment of the present invention. Figure 3 shows different aspects, different embodiments, of the present invention.
An object slide 300 is shown, comprising an upper surface 313 and a lower surface 314 arranged opposite each other. The object slide 300 further comprises a first side surface 315 and a second side surface 316 arranged spaced apart from each other, wherein the first side surface 315 and the second side surface 316 are arranged perpendicular to the upper surface 313 (and/or to the lower surface 314). The object slide 300 is made of a transparent material and a marker 310 is arranged inside the object slide 300. The marker 310 extends inside the object slide 300 between the upper surface 313 and the lower surface 314. Further, the marker 310 comprises a three dimensional shape, which can be seen in comparison of the two views of the object slide 300 in Figure 3. The marker 310 is configured and arranged such that the marker 310 is visible from at least two surfaces of the object slide 300. For instance, the marker 310 is visible from the first side surface 315 but may also be visible from second side surface 316, hence may be visible from the front and back side of the object slide 300. Furthermore, the marker 310 may be visible from the first side surface 315 and from the upper surface 313. Additionally or alternatively, the marker 310 may be visible from the lower surface 314. Further, the at least two surfaces from which the marker 310 may be visible may be surfaces of the object slide 300 which are orthogonal to each other. For example, the first side surface 315 and the upper surface 313.

The object slide 300 may also comprise the object area 103 to which an object 330 may be attached. If the marker 310 is applied to the object slide 300 during a manufacturing process the object 330 may be attached later in a laboratory or the like. As can be seen in Figure 3 the three dimensional shape of the marker 310 comprises a shape of at least one of a rectangular shape. Other shapes like a cuboid shape, a sphere shape, and a dot shape may also be possible. Further, it is illustrated that the marker 310 may comprises a plurality of volume elements 317 for forming the three dimensional shape. In particular, the volume elements 317 are arranged in a first portion 311 and a second portion 312, which will be described further in Figure 4. The marker 310 may be arranged in the label area 102. It may also be possible to arrange the marker 310 at any other position inside the object slide. Hence, the marker 310 may also be arranged in the object area 103 as long as the object is still clearly visible. Further, the orientation of the marker 310 is only an illustrating example. The orientation of the marker 310 may be changed, for instance the marker 310 may be arranged at one of the two longer sides of the object slide, hence on a plane perpendicular to the illustrated plane in Figure 3.

Figure 4 illustrates a detailed view of the label area 102 of an object slide 300 according to an embodiment of the present invention. Also in Figure 4 different aspects, different embodiments, are illustrated. The marker 310 comprises a first portion 311 and a second portion 312, wherein the first portion 311 and the second portion 312 are arranged adjacent to each other. In particular, they are arranged in such a manner that they do not overlap in the plane of their length extension. The first portion 311 and the second portion 312 may be spaced apart from each other, such that they do not overlap in neither direction. As can be seen in Figure 4 and also in Figure 3, the first portion 311 and the second portion 312 may be arranged adjacent to each other in a direction of a plane parallel to the upper 313 and the lower surface 313. On the other hand, they may also be arranged adjacent to each other in a direction of a plane orthogonal to the upper surface 313. Moreover, the first portion 311 and the second portion 312 may be arranged adjacent to each other in a direction of a plane parallel to the first side surface 315. This means that, when viewed from the first side surface 315 as the front surface of the object slide 300, the first portion 311 may be arranged behind the second portion 312. In Figure 4, it is further illustrated, that the marker 310 may comprise a first row of a plurality of volume elements 317 and a second row of a plurality of volume elements 317. In particular, that the first row may be associated with the first portion 311 and wherein the second row 312 may be associated with the second portion 312. As can be seen, the first portion 311 comprises a plurality of volume elements 317, which are arranged in a row extending in a direction parallel to the upper surface and the second portion 312 comprises a plurality of volume elements 317, which are arranged in a row extending in a direction parallel to the upper surface 313.

The first portion 311 may arranged in a direction nearer to the upper surface 313 than the second portion 312. In this manner, the first portion is not overlaid from the second portion 312, when viewed from the first side surface 315. Further, the first portion may be arranged in a direction nearer to the second side surface 316 than the second portion 312. Accordingly, the first portion is not overlaid from the second portion 312, when viewed from the upper surface 313.

As shown in Figures 3 and 4, at least two volume elements 317 of the plurality of volume elements 317 differ from each other in shape. In particular, the volume elements 317 may differ in length, wherein the length direction extends in a plane parallel to the upper surface 313. In particular, the volume elements 317 in the Figures comprise a rectangular shape, wherein the rectangular shape of at least one volume element 317 from the plurality of volume elements 317 differ in size of the other volume elements 317.

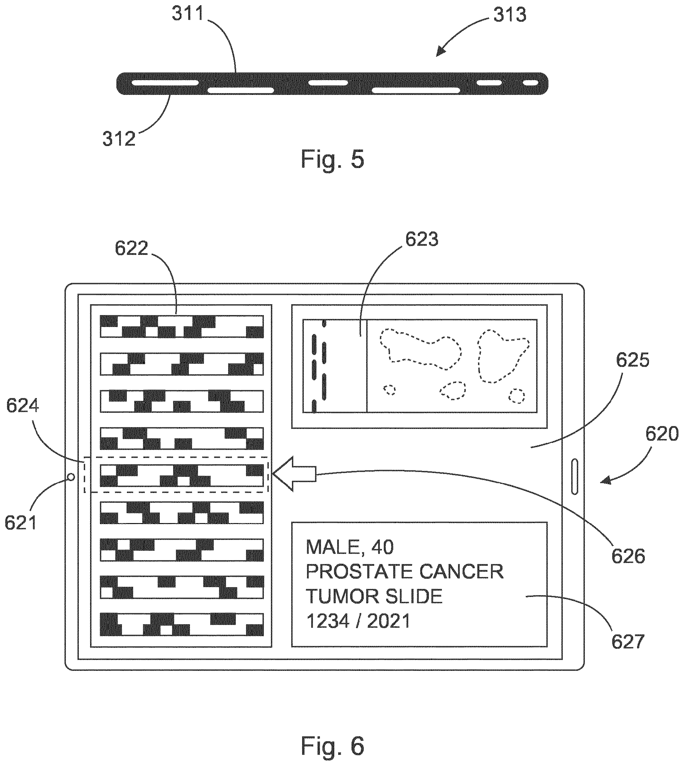

Figure 5 illustrates another view, upper side view of the object slide 300 according to an embodiment of the invention. The object slide 300 is viewed from the upper surface 313. The marker 310 and the at least two portions 311 and 312 are illustrated. As can be seen in Figure 5, the first portion 311 and the second portion 312 are both visible from the upper surface 313 of the object slide 300. Both the first portion 311 and the second portion 312 comprise a plurality of volume elements 317. It may also be possible that only one of the portions comprise a plurality of volume element 317. Further, it may also be possible that only one portion, for example the first portion 311, is used as a marker 310. The first portion 311 and the second portion 312 are spaced apart from each other in a direction along the extending direction of the upper surface 313 and/or in a direction perpendicular to the extending direction of the upper surface 313. In particular, they may be spaced apart in such manner that no overlap is generated on the other hand they may be spaced apart but are adjacent to each other, such that they are in contact with the next volume element 317 at the respective beginning and/or end of a (or each) volume element 317. The first portion 311 may comprise 3 volume elements 317 with different length but same width. The second portion 312 may comprise also 3 volume elements 317 with different lengths but same width. The volume elements of the two portions 311 and 312 may overlap in a plane orthogonal to the upper surface 313.

Figure 6 illustrates a marker reading device 620 according to an embodiment of the invention. The marker reading device 620 may be used for a method for identifying an object slide 300 according to any of the embodiments as described herein. The method may comprise the steps of providing a plurality of object slides 622 to the marker reading device 620. In particular, the object slides 622 are provided in a stack or bulk to the marker reading device 620. Further, the method comprises the step of determining an object slide 623 to be identified by a user, analyzing the plurality of object slides 622 by the marker reading device 620, comparing the plurality of object slides 622 with the object slide 623 to be identified, output of a comparison signal to the marker reading device 620 if one of the plurality of object slides 622 matches the object slide 623 to be identified, wherein the step of analyzing the plurality of object slides 622 comprises analyzing the upper surface of the object slide 300. The order of the various steps is provided for the sake of illustration, and may be altered without departing from the scope of the present teachings.

The marker reading device 620 may be for example a tablet. The device 620 may comprise a camera 621, an interface 625. On the interface, which may be a display, the user may be able to perform an input to the marker reading device 620. For instance the object slide 623, which is searched, is determined. Further, the device 620 may show a picture or a live view of the scanned object slide 624, in particular of stack, bulk of object slides 622. The marker reading device 620 may be able to read the marker of the scanned object slide 624 from the bulk of object slides 622. On the other hand, the device 620 may be able to read all marker of the bulk of object slides 622 simultaneously. The result may be indicated to the user, for instance with an indicator 626 directly on the picture showing the bulk of object slides 622. The marker reading device 620 as illustrated with its embodiments in Figure 6 may be able to determine an inventory of object slides in a storage of object slides.

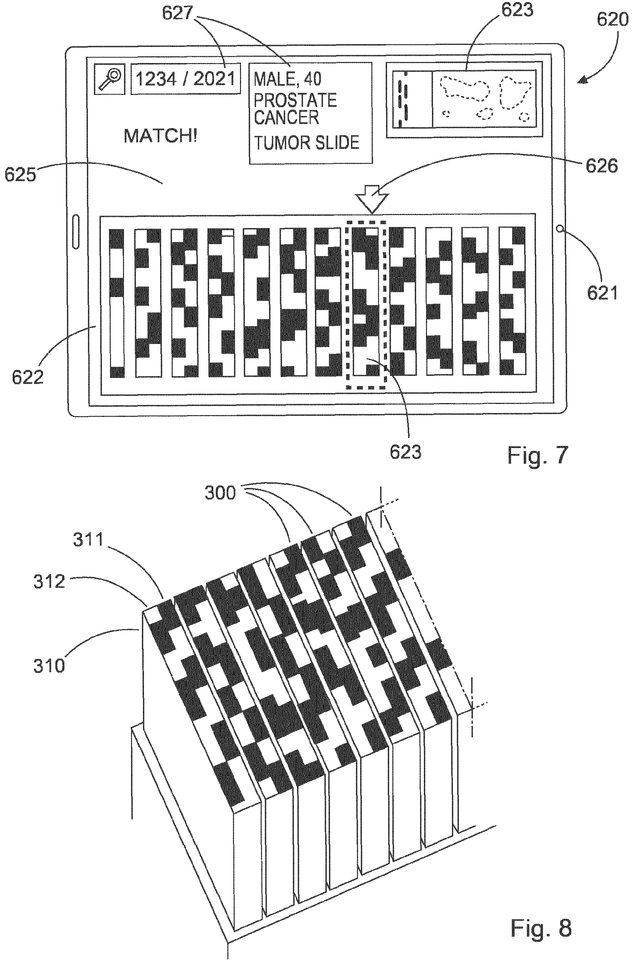

Figure 7 illustrates a marker reading device 620 according to an embodiment of the invention. The marker reading device 620 may be the same as described with Figure 6 and may be able to perform the same method for identifying an object slide as described with Figure 6. The scanned, read object slides 624 may be compared with the object slide 623 which is searched for. The result may be indicated to the user, for instance with an indicator 626 directly on the picture showing the bulk of object slides 622, for instance a positive match will indicate the respective object slide and its marker in green and a negative match in red. Further, the device may display to the user via the interface information 627 relating to the object slide 623, which is searched. For example, the identification number of the object slide and respective specimen information may be provided with the information 627.

Fig. 8 illustrates a stack of object slides 300, all of them comprising a marker 310 according to an embodiment of the invention. Each of the object slides 300 comprises a different marker 310 for the individual identification of each object slide 300. Accordingly, for each object slide different markers 310 can be provided which encode the object slide specific information. In this example the markers 310 of each object slide 300 comprise a first portion 311 and a second portion 312, wherein each portion comprises a row of volume elements.

In accordance with various embodiments of the present disclosure, the methods described herein may be implemented using a hardware computer system that executes software programs. Further, in an exemplary, non-limited embodiment, implementations can include distributed processing, component/object distributed processing, and parallel processing. Virtual computer system processing may implement one or more of the methods or functionalities as described herein, and a processor described herein may be used to support a virtual processing environment.

While the invention has been illustrated and described in detail in the drawings and foregoing description, such illustration and description are to be considered illustrative or exemplary and not restrictive; the invention is not limited to the disclosed embodiments.

Other variations to the disclosed embodiments can be understood and effected by those skilled in the art in practicing the claimed invention, from a study of the drawings, the disclosure, and the appended claims. In the claims, the word "comprising" does not exclude other elements or steps and the indefinite article "a" or "an" does not exclude a plurality. The mere fact that certain measures are recited in mutually different dependent claims does not indicate that a combination of these measured cannot be used to advantage. Any reference signs in the claims should not be construed as limiting the scope.

### List of reference signs:

- 100, 300: glass slide
- 101: label
- 102: label area
- 103: object area
- 104: length
- 105: width
- 106: thickness
- 310: marker
- 311: first portion of marker
- 312: second portion of marker
- 313: upper surface
- 314: lower surface
- 315: first side surface
- 316: second side surface
- 317: volume element
- 330: object
- 620: marker reading device
- 621: camera
- 622: stack of object slides
- 623: searched object slide
- 624: object slide
- 625: user interface
- 626: indicator
- 627: object slide information

## Claims

1. An object slide, comprising
an upper surface and a lower surface arranged opposite each other,
a first side surface and a second side surface arranged spaced apart from each other, wherein the first side surface and the second side surface are arranged perpendicular to the upper surface,
wherein the object slide is made of a transparent material,
a marker arranged inside the object slide,
wherein the marker extends inside the object slide between the upper surface and the lower surface,
wherein the marker comprises a three dimensional shape,
wherein the marker is configured and arranged such that the marker is visible from at least two surfaces of the object slide.

2. The object slide according to claim 1,
wherein the three dimensional shape comprises a shape of at least one of a rectangular shape, a cuboid shape, a sphere shape, and a dot shape.

3. The object slide according to any one of the claims 1 or 2,
wherein the marker comprises a plurality of volume elements for forming the three dimensional shape.

4. The object slide according to any one of the preceding claims,
wherein the at least two surfaces from which the marker is visible are surfaces of the object slide which are orthogonal to each other.

5. The object slide according to any one of the preceding claims,
wherein the marker is generated inside the object slide by laser technology.

6. The object slide according to any one of the preceding claims,
wherein the marker comprises a first portion and a second portion, wherein the first portion and the second portion are arranged adjacent to each other.

7. The object slide according to claim 7,
wherein the first portion and the second portion are spaced apart from each other.

8. The object slide according to claim 6 or 7,
wherein the first portion and the second portion are arranged adjacent to each other in a direction of a plane parallel to the upper and the lower surface.

9. The object slide according to claims 6 to 8,
wherein the first portion and the second portion are arranged adjacent to each other in a direction of a plane parallel to the first side surface.

10. The object slide according to any of the preceding claims,
wherein the marker comprises a first row of a plurality of volume elements and a second row of a plurality of volume elements.

11. The object slide according to claim 10,
wherein the first row is associated with the first portion and wherein the second row is associated with the second portion.

12. The object slide according to any of the claims 6 to 11,
wherein the first portion is arranged in a direction nearer to the upper surface than the second portion.

13. The objet slide according to any of the claims 3 to 12,
wherein at least two volume elements of the plurality of volume elements differ from each other in shape.

14. The object slide according to any of the preceding claims 3 to 13,
wherein the volume elements comprise a rectangular shape,
wherein the rectangular shape of at least one volume element from the plurality of volume elements differ in size of the other volume elements.

15. Method for identifying an object slide according to any of the claims 1 to 13 using a marker reading device , comprising the steps of
providing a plurality of object slides to the marker reading device,
determining an object slide to be identified by a user,
analyzing the plurality of object slide by the marker reading device,
comparing the plurality of object slides with the object slide to be identified,
output of a comparison signal to the marker reading device if one of the plurality of object slides matches the object slide to be identified,
wherein the step of analyzing the plurality of object slides comprises analyzing the upper surface of the object slide .

16. Method for manufacturing an object slide according to any one of the claims 1 to 14,
wherein the marker is applied to the object slide by laser technology .
